# EUROPÄISCHE PATENTSCHRIFT

(11) **EP 0 887 215 B1**
(45) Veröffentlichungstag und Bekanntmachung des Hinweises auf die Patenterteilung: **11.01.2006**
(21) Anmeldenummer: 98107222.6
(22) Anmeldetag: 21.04.1998
(51) Int. Cl.: B60J 7/185

(54) **Cabriolet-Fahrzeug**
Convertible vehicle
Véhicule convertible

(30) Priorität: 25.06.1997 DE 29711049 U
(43) Veröffentlichungstag der Anmeldung: 30.12.1998
(73) Patentinhaber: Wilhelm Karmann GmbH, 49084 Osnabrück (DE)
(72) Erfinder: Richter, Wolfgang, D-49134 Wallenhorst (DE)
(74) Vertreter: Busse & Busse Patentanwälte

(56) Entgegenhaltungen:
- DE-A- 4 415 969
- DE-U- 9 416 155

## Beschreibung

Die Erfindung betrifft ein Cabriolet-Fahrzeug mit einem randseitige Klappgestänge-Baugruppen aufweisenden Faltverdeck gemäß dem Oberbegriff des Anspruchs 1.

Bei einem bekannten Cabriolet-Fahrzeug dieser Art (DE 43 08 385 C2) ist das Faltverdeck im Bereich seines zwischen den Klappgestänge-Baugruppen befindlichen vorderen Dachspitzenteils mit angetriebenen Riegelarmen versehen, wobei diese jeweils mittels einer entfernt angebrachten Betätigungseinrichtung an einem Gegenglied am Windschutzscheibenrahmen festlegbar bzw. von diesem lösbar sind. Als Betätigungseinrichtung ist ein Antriebszylinder mit einer Seilzugverbindung vorgesehen, mittels der der Riegelarm nur aus seiner Schließstellung lösbar ist. Zur Festlegung des Riegelarms am Gegenglied ist ein zusätzliches Stellorgan im vorderen Bereich der Klappgestänge-Baugruppe vorgesehen, so daß in einem engen Einbauraum zusätzliche Bauteile zu montieren sind und diese eine nachteilige Gewichtserhöhung im Nahbereich des Dachspitzenteils verursachen.

Die Erfindung befaßt sich mit dem Problem, ein Cabriolet-Fahrzeug zu schaffen, dessen angetriebene Verdeckverriegelung bei konstruktiv einfachem und raumsparendem Aufbau so in die Klappgestänge-Baugruppe integriert ist, daß an deren Dachspitzenteil mit wenigen Bauteilen eine weitgehende Gewichtsreduzierung möglich ist.

Ausgehend von einem Cabriolet-Fahrzeug nach dem Oberbegriff des Anspruchs 1 löst die Erfindung diese Aufgabe mit den Merkmalen des kennzeichnenden Teiles des Anspruchs 1. Hinsichtlich wesentlicher weiterer Ausgestaltungen wird auf die Ansprüche 2 bis 6 verwiesen.

Das erfindungsgemäße Cabriolet-Fahrzeug weist im Bereich seiner Klappgestänge-Baugruppen jeweils ein Riegelorgan auf, das mit einer unmittelbar am heckseitigen Verdeckantrieb angreifenden Antriebsverbindung zu einer kompakten Baueinheit vereinigt ist, so daß für eine Bewegung der Riegelorgane zusätzliche Betätigungseinrichtungen entbehrlich sind, damit der Aufwand bei der Herstellung und Montage des Faltverdecks verringert ist, und insbesondere im engen vorderen Teil der Klappgestänge-Baugruppe bei raumsparender Anordnung der Bauteile eine Gewichtsreduzierung erreicht ist.

In zweckmäßiger Ausführung ist die am Riegelorgan angreifende Antriebsverbindung von einem Schub/Zug-Gestänge gebildet, das im wesentlichen parallel zur Klappgestänge-Baugruppe verläuft und endseitig an den Teilen des Verdeckantriebs so angreift, daß zur direkten Einführung des Riegelorgans in eine Riegeltasche ein geringer Stellweg erforderlich ist und bei einem Öffnungsvorgang des Faltverdecks das Riegelorgan über eine gegenläufige Zugbewegung einfach lösbar ist.

Weitere Einzelheiten und Vorteile der Erfindung ergeben sich aus der nachfolgenden Beschreibung und den Zeichnungen, die ein Ausführungsbeispiel des erfindungsgemäßen Cabriolet-Fahrzeugs veranschaulichen. In der Zeichnung zeigen:
- Fig. 1: eine Seitenansicht eines für ein Cabriolet-Fahrzeugs vorgesehenen Faltverdecks mit einer in eine Klappgestänge-Baugruppe integrierten Antriebsverbindung für ein in Schließstellung befindliches Riegelorgan,
- Fig. 2: eine Seitenansicht ähnlich Fig. 1 mit dem Riegelorgan in Öffnungsstellung, und
- Fig. 3: eine vergrößerte Ausschnittsdarstellung des Riegelorgans in Schließstellung gemäß Fig. 1.

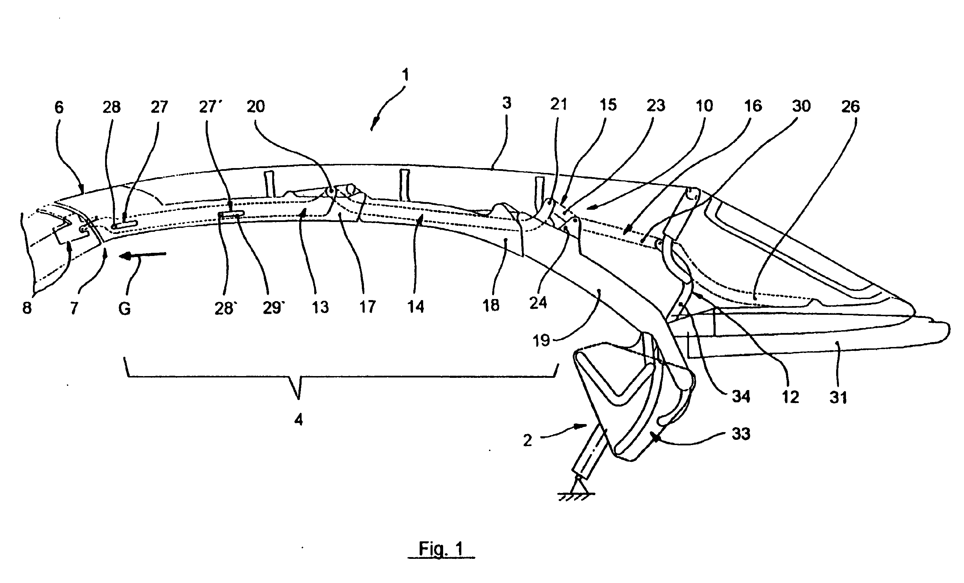

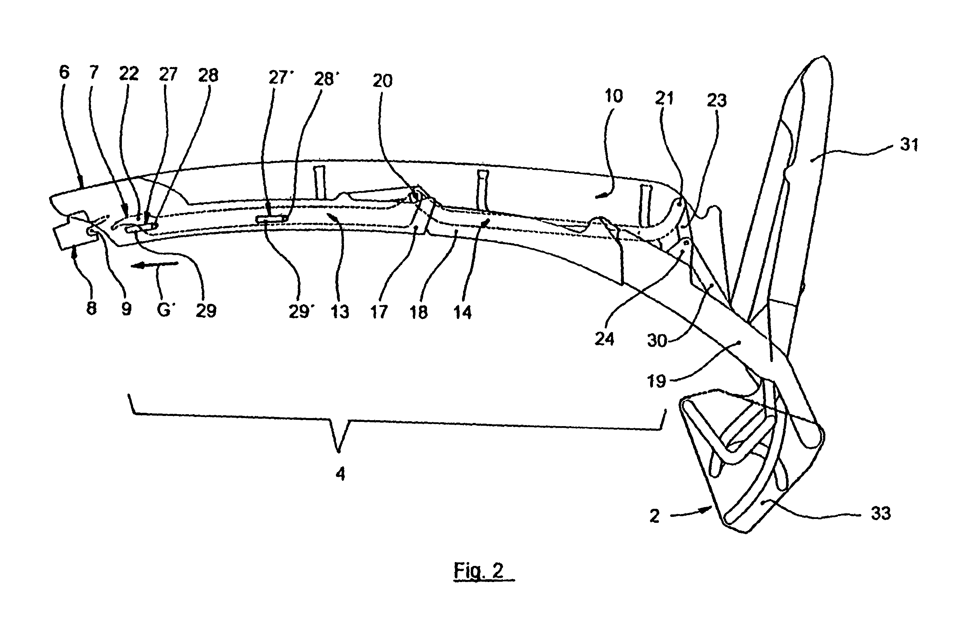

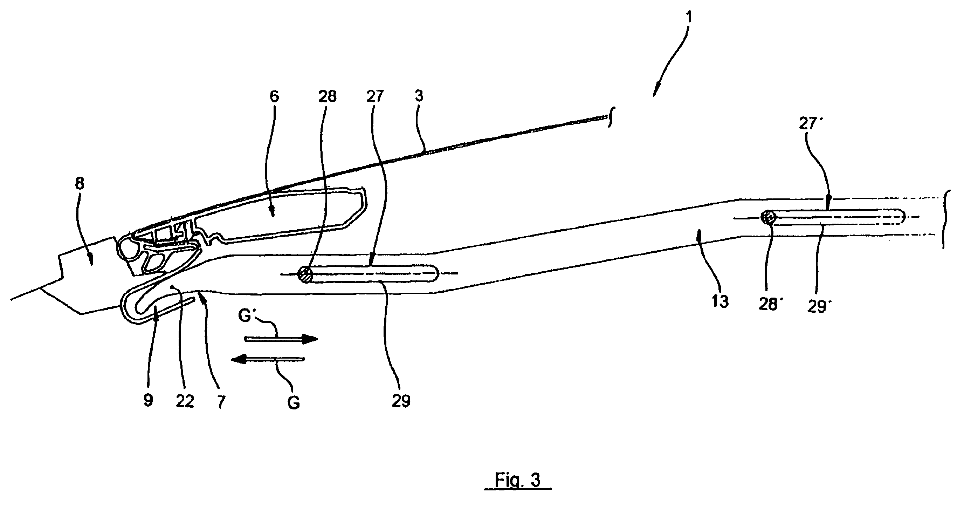

In Fig. 1 ist ein insgesamt mit 1 bezeichnetes Faltverdeck für ein nicht näher dargestelltes Cabriolet-Fahrzeug veranschaulicht, dessen heckseitiger Verdeckantrieb 2 an einer jeweils randseitig die Dachhaut 3 des Faltverdecks 1 untergreifenden Klappgestänge-Baugruppe 4 angreift. Das Faltverdeck 1 ist mit einem vorderen Dachspitzenteil 6 (Fig. 3) versehen, an dem zumindest ein angetriebenes Riegelorgan 7 vorgesehen ist, das am Windschutzscheibenrahmen 8 in einer Riegeltasche 9 festlegbar (Fig. 1) bzw. aus dieser lösbar (Fig. 2) ist.

Bei dem erfindungsgemäßen Faltverdeck 1 ist das Riegelorgan 7 über eine mit dem Verdeckantrieb 2 gekoppelte Antriebsverbindung 10 (teilweise Strichdarstellung) betätigbar. Die Antriebsverbindung 10 ist dabei im Nahbereich des Verdeckantriebs 2 an einem oder mehreren beweglichen Teilen des Klappgestänges 4 angelenkt.

In konstruktiv einfacher und raumsparender Ausbildung weist die Antriebsverbindung 10 mehrere mit einer heckseitigen Sturmstangensteuerung 12 verbundene Glieder 13,14,15,16 eines Schub/Zug-Gestänges auf. Das Schub/Zug-Gestänge als die Antriebsverbindung 10 verläuft dabei im wesentlichen parallel zu an einer Hauptsäule 19 des Verdeckantriebs angelenkten vorderen Schenkeln 17,18 der Klappgestänge-Baugruppe 4. Im Bereich jeweiliger Gelenkverbindungspunkte 20,21 ist das Schub/Zug-Gestänge entsprechend der Bewegung der Klappgestänge-Baugruppe 4 beim Öffnen oder Schließen schwenkbar.

Die vergrößerte Ausschnittsdarstellung gemäß Fig. 3 verdeutlicht, daß das vordere Glied 13 des Schub/Zug-Gestänges einen das Riegelorgan 7 bildenden Zapfenteil 22 aufweist, der über eine parallel zur Fahrzeugslängsachse verlaufende Schubbewegung direkt in die Riegeltasche 9 am Windschutzscheibenrahmen 8 einführbar bzw. über eine gegenläufige Zugbewegung aus diesem lösbar ist (Pfeil G,G').

Das vordere Glied 13 des Schub/Zug-Gestänges ist an dem mittleren Glied 14 angelenkt, das anderenends an dem als Schwenkhebel 23 ausgebildeten Glied 15 angreift. Dieser Schwenkhebel 23 ist mit einem an der Hauptsäule 19 der Klappgestänge-Baugruppe 4 vorgesehenen Antriebs-Stützlager 24 verbunden. Ausgehend von diesem Antriebs-Stützlager 24 steht der Schwenkhebel 23 mit der Sturmstangensteuerung 12 in Wirkverbindung, wobei diese einerseits das Glied 16 als ein Spannteil 30 aufweist, das andererseits mit einer an einem heckseitigen Spannbügel 31 angreifenden Bogenstrebe 26 verbunden ist.

Für eine positionsgenaue Bewegung des Riegelorgans 7 mittels der Antriebsverbindung 10 ist zumindest das vordere Glied 13 des Schub/Zug-Gestänges an der zugehörigen Klappgestänge-Baugruppe 4 geführt. In konstruktiv einfacher Ausführung sind zwei Kulissenführungen 27,27' vorgesehen, die jeweils einen in einer Längsnut 29,29' beweglich abgestützten Führungssstift 28,28' aufweisen.

Die Zusammenschau von Fig. 1 und Fig. 2 verdeutlicht die Wirkung der Antriebsverbindung 10 bei Betätigung des Schub/Zug-Gestänges in zwei unterschiedlichen Bewegungsphasen. Mittels des Verdeckantriebes 2 wird der im Bereich eines Hauptlagers 33 abgestützte Spannbügel 31 gemeinsam mit den Bauteilen der Sturmstangensteuerung 12 aus der Schließstellung gelöst. Über eine Verbindungsstrebe 34 wird dem vorderseitig an dieser angelenkten Spannteil 30 eine Absenkbewegung vermittelt und diese im Bereich des Antriebs-Stützlagers 24 auf den Schwenkhebel 23 derart übertragen, daß dieser um das Stützlager 24 im Uhrzeigersinn schwenkt, den Gliedern 13 und 14 die Zugbewegung (Pfeil G') vermittelt wird und damit der in Fig. 2 in einer Endphase dargestellte Entriegelungsvorgang erfolgt.

In umgekehrtem Bewegungsablauf erfolgt in einer letzten Phase der Bewegung des Faltverdecks 1 beim Schließen die Verriegelung des Riegelorgans 7 über eine Schubbewegung (Pfeil G) der Glieder 13 und 14 zur Riegeltasche 9 hin (Fig. 3).

## Patentansprüche

1. Cabriolet-Fahrzeug mit einem randseitige Klappgestänge-Baugruppen (4) aufweisenden und über einen heckseitigen Verdeckantrieb (2) bewegbaren Faltverdeck (1), an dessen vorderem Dachspitzenteil (6) zumindest ein angetriebenes Riegelorgan (7) vorgesehen ist, das am Windschutzscheibenrahmen (8) in einer Riegeltasche (9) festlegbar bzw. aus dieser lösbar ist, **dadurch gekennzeichnet, daß** das Riegelorgan (7) über eine nur mit dem heckseitigen Verdeckantrieb (2) gekoppelte Antriebsverbindung (10) betätigbar ist.

2. Cabriolet-Fahrzeug nach Anspruch 1, **dadurch gekennzeichnet, daß** die Antriebsverbindung (10) im Nahbereich des Verdeckantriebs (2) an einem beweglichen Teil der Klappgestänge-Baugruppe (4) angelenkt ist.

3. Cabriolet-Fahrzeug nach Anspruch 1 oder 2, **dadurch gekennzeichnet, daß** die Antriebsverbindung (10) von mehreren mit einer heckseitigen Sturmstangensteuerung (12) verbundenen Gliedern (13,14,15,16) eines Schub/Zug-Gestänges gebildet ist.

4. Cabriolet-Fahrzeug nach einem der Ansprüche 1 bis 3, **dadurch gekennzeichnet, daß** das vordere Glied (13) des Schub/Zug-Gestänges einen das Riegelorgan (7) bildenden Zapfenteil (22) aufweist, der über eine parallel zur Fahrzeuglängsachse verlaufende Schubbewegung (G) direkt in die Riegeltasche (9) am Windschutzscheibenrahmen (8) einführbar bzw. über eine gegenläufige Zugbewegung (G) aus diesem lösbar ist.

5. Cabriolet-Fahrzeug nach einem der Ansprüche 1 bis 4, **dadurch gekennzeichnet, daß** das vordere Glied (13) des Schub/Zug-Gestänges an einem mittleren Glied (14) angelenkt ist, dieses anderenends an einem Schwenkhebel (23) angreift, der mit einem an einer Hauptsäule (19) der Klappgestänge-Baugruppe (4) vorgesehenen Antriebs-Stützlager (24) verbunden ist, in dem der Schwenkhebel (23) mit der Sturmstangensteuerung (12) in Wirkverbindung steht.

6. Cabriolet-Fahrzeug nach einem der Ansprüche 1 bis 5, **dadurch gekennzeichnet, daß** zumindest das vordere Glied (13) des Schub/Zug-Gestänges an der zugehörigen Klappgestänge-Baugruppe (4) geführt ist.

## Claims

1. Convertible vehicle having a folding soft top (1) which has folding linkage assemblies (4) at the edges, which can be moved by means of a soft-top drive (2) at the rear of the vehicle, and at whose front roof-tip part (6) there is provided at least one driven lock-bolt member (7) which can be locked to the frame (8) of the windscreen in a lock-bolt pocket (9) or can be released therefrom, **characterised in that** the lock-bolt member (7) can be actuated by means of a driving connection (10) which is coupled only to the soft-top drive (2) at the rear of the vehicle.

2. Convertible vehicle according to claim 1, **characterised in that** driving connection (10) is hinged to a movable part of the folding linkage assembly (4) in the region close to the soft-top drive (2).

3. Convertible vehicle according to claim 1 or 2, **characterised in that** the driving connection (10) is formed by a plurality of members (13, 14, 15, 16) belonging to a thrust/traction linkage which are connected to a storm-bar control means (12) at the rear of the vehicle.

4. Convertible vehicle according to one of claims 1 to 3, **characterised in that** the front member (13) of the thrust/traction linkage has a spigot part (22) which forms the lock-bolt member (7) and which can be inserted directly in the lock-bolt pocket (9) on the frame (8) of the windscreen by a movement (G) under thrust extending parallel to the longitudinal axis of the vehicle and can be released therefrom by a movement (G) under traction in the opposite direction.

5. Convertible vehicle according to one of claims 1 to 4, **characterised in that** the front member (13) of the thrust/traction linkage is hinged to a centre member (14), and the latter engages at its other end with a pivoting lever (23) which pivoting lever (23) is connected to an actuating and supporting mounting (24) which is provided on a main arm (19) of the folding linkage assembly (4) and at which the pivoting lever (23) is operatively connected to the storm-bar control means (12).

6. Convertible vehicle according to one of claims 1 to 5, **characterised in that** at least the front member (13) of the thrust/traction linkage is guided on the associated folding linkage assembly (4).

## Revendications

1. Cabriolet comportant une capote pliante (1) présentant des ensembles de tringlerie escamotable (4) sur le côté et pouvant se déplacer à l'aide d'un entraînement de capote (2) côté arrière, capote sur la pointe de toit (6) avant de laquelle est prévu au moins un organe de verrouillage entraîné (7) pouvant immobilisé sur le cadre du pare-brise (8) dans une poche de verrouillage (9) ou débloqué hors de celle-ci,
**caractérisé en ce que**
l'organe de verrouillage (7) peut être actionné par l'intermédiaire d'une liaison d'entraînement (10) couplée uniquement à l'entraînement de capote (2) côté arrière.

2. Cabriolet selon la revendication 1,
**caractérisé en ce que**
la liaison d'entraînement (10) est articulée à proximité de l'entraînement de capote (2) sur une partie mobile de l'ensemble de tringlerie escamotable (4).

3. Cabriolet selon la revendication 1 ou 2,
**caractérisé en ce que**
la liaison d'entraînement (10) est formée de plusieurs éléments (13, 14, 15, 16), reliés à une commande de barre tempête (12), à l'arrière, d'une tringlerie poussée/traction.

4. Cabriolet selon l'une quelconque des revendications 1 à 3,
**caractérisé en ce que**
l'élément avant (13) de la tringlerie poussée/traction présente un pivot (22) formant l'organe de verrouillage (7) qui peut être introduit directement, par l'intermédiaire d'un mouvement de poussée (G) parallèle à l'axe longitudinal du véhicule dans la poche de verrouillage (9) sur le cadre du pare-brise (8) ou bien débloquée de celle-ci par l'intermédiaire d'un mouvement de traction (G) dans le sens contraire.

5. Cabriolet selon l'une quelconque des revendications 1 à 4,
**caractérisé en ce que**
l'élément avant (13) de la tringlerie poussée/traction est articulé sur un élément central (14), celui-ci agissant de l'autre côté sur un levier pivotant (23) relié à un palier d'appui d'entraînement (24) prévu sur une jambe principale (19) de l'ensemble de tringlerie escamotable (4), palier dans lequel le levier pivotant (23) est en interaction avec la commande de barre tempête (12).

6. Cabriolet selon l'une quelconque des revendications 1 à 5,
**caractérisé en ce qu'**
au moins l'élément avant (13) de la tringlerie poussée/traction passe contre l'ensemble de tringlerie escamotable (4) correspondant.
